# EUROPEAN PATENT APPLICATION

(11) **EP 4 818 366 A1**
(43) Date of publication of application: **07.10.2026**
(21) Application number: 25168069.0
(22) Date of filing: 02.04.2025
(51) Int. Cl.: C25B 1/04, C25B 9/70, C25B 15/02, H02M 7/155, H02M 7/162

(54) **HVRT OPERATION**

(71) Applicant: Siemens Energy Global GmbH & Co. KG, 81739 München (DE)
(72) Inventor: Loku, Fisnik, 90439 Nürnberg (DE); Buratckii, Artem, 90459 Nürnberg (DE); Dros, Arne, 91052 Erlangen (DE); Langenberg, Nils, 90461 Nürnberg (DE)

(57) **Abstract**

The present invention relates to a method (100) for operating an electrolysis system (1) and an electrolysis system (1). The electrolysis system (1) has multiple electrolysis modules (8) connected to a power grid (4) via a central transformer unit (2) and multiple rectifier units (6). A source voltage provided at the central transformer unit (2) and a control variable in a control system (12) of the rectifier units (6) are monitored (S1, S2), wherein said control variable is associated with the firing angles of said rectifier units (6). When the monitored source voltage fulfils a source voltage intervention criterion and/or the monitored control variable fulfils a control variable intervention criterion, the rectifier units (6) are operated (S4) with a constant firing angle.

## Description

The present invention relates to a method for operating an electrolysis system and an electrolysis system.

Consumers consuming a significant amount of power from a (public) power grid, such as electrolysis plants, are usually required to comply with so-called grid code requirements. An important part of these requirements, especially for large consumers, is the so-called high-voltage ride through (HVRT) capability. This requirement requires consumers to remain fully connected to the grid even in case of a temporary voltage level increase above the nominal grid voltage level. Usually, the grid operator specifies a curve which indicates for how long the consumer must remain connected to the grid for a given overvoltage. Typical high-voltage ride through levels are 1.3 times the nominal voltage level for a limited amount of time, usually in the range of hundreds of milliseconds, or 1.15 to 1.25 times the nominal voltage level for longer time periods, usually several seconds up to 1 minute. For voltage levels exceeding these defined limitations, a disconnection of the consumer from the grid is allowed.

Such a HVRT capability is challenging for electrolysis systems, as their electrolysis modules, also termed electrolysers, typically comprise a flat voltage-current curve. That means that, as the electrolysis characteristic is highly dependent on the input DC voltage, already a slight increase of input DC voltage results in a significant DC current increase. This can lead to a significant DC overcurrent, effectively up to 3 times the nominal operating current, which in turn triggers a protection mechanism responsible for current safety either in the AC section or the DC section of the electrolysis system. This might trigger a disconnect of the corresponding electrolysis module or even the whole electrolysis system from the power grid.

Additionally, state of the art electrolysis systems usually comprises a central transformer unit for connection to a power grid, rectifier units for rectifying the transformed grid voltage into DC voltage, wherein the electrolysis modules operate on DC current. While the rectifier units can regulate, particularly limit, the DC current on their output side to some degree, there are often limitations as to how fast the rectifier units can react to changes in the input voltage level. For example, thyristor based rectifiers can regulate the output DC current by means of the so-called firing angle, but are dependent on the zero crossing of the input voltage. Considering three phases and a voltage input signal at a frequency of 50 Hz, regardless of how fast rectifier control is, these rectifiers can have an impact only when the positive zero crossing of the voltage occurs, meaning that regardless if the firing angle is updated in the µs range, the firing pulses can have an impact only every 3.3 ms.

It is therefore an object of the present invention to improve the high voltage ride through (HVRT) capability of an electrolysis system, particularly to reliably prevent significant overcurrents at the electrolysis modules and/or improve the reaction time in case of a HVRT event.

This object is achieved by a method for operating an electrolysis system and the electrolysis system according to the independent claims.

Preferred embodiments are subject to the dependent claims and the following description.

According to a first aspect of the invention, the method for operating an electrolysis system having multiple electrolysis modules connected to a power grid via a central transformer unit and multiple rectifier units comprises: i) monitoring a source voltage provided at the central transformer unit; ii) monitoring a control variable in a control system of the rectifier units, said control variable being associated with the firing angles of said rectifier units; and iii) operating, when the monitored source voltage fulfils a source voltage intervention criterion and/or the monitored control variable fulfils a control variable intervention criterion, the rectifier units with a constant firing angle.

An aspect of the invention is based on the approach of changing the mode of operation of rectifier units of an electrolysis system when a HVRT event is detected, i.e. when an overvoltage of e.g. the power grid above the nominal voltage level would cause an overcurrent at the electrolysis modules. Specifically, instead of standard rectifier unit control, which includes adapting the firing angle of each rectifier unit in dependence of the actual grid voltage or rectifier unit input voltage, the rectifier units are all operated at a constant firing angle. To achieve the nominal DC current operation in case of an HVRT event, said constant firing angle is preferably higher than the nominal firing angle. For example, instead of fluctuating between e.g. 0° and 10° as in standard operation, the firing angle may be set to a constant value of 20° or more, e.g. 40°. By this means, the time-consuming active firing angle control may be bypassed and an immediate reaction to an HVRT event may be established, particularly as soon as physically possible.

Preferably, up to three criteria for determining a HVRT event (i.e. the necessity to operate the electrolysis system in an HVRT mode and stay connected to the power grid despite a significant overvoltage in the grid) may be considered. On the one hand, the source voltage provided at the central transformer unit may be monitored. Particularly, the source voltage can be monitored on the primary or the secondary side of the transformer unit, i.e. the source voltage to be monitored may be the original grid voltage (the central transformer unit input voltage) or the transformed operating voltage provided to the rectifier units (the central transformer unit output voltage). On the other hand, it has proven to be effective to monitor a control variable in the control system, i.e. the standard controller, of the rectifier units, wherein said control variable is associated with the firing angles of said rectifier units. A third possibility is to monitor the rate of the voltage increase over time, i.e. dV/dt. If either the monitored source voltage, the monitored control variable or the voltage increase rate fulfils an associated intervention criterion, for example if the grid voltage or the voltage increase rate reaches or exceeds a voltage threshold or rate threshold, respectively, or the control variable behaves in a manner indicative of an HVRT event, the rectifier units may be immediately operated to react accordingly. By considering said two criteria, there is a high probability that an HVRT event is detected on time, and an overcurrent on the DC side of the rectifier units can be prevented or at least be limited effectively.

To this end, it is advantageously, preferably continuously, checked whether the source voltage intervention criterion and/or the control variable intervention criterion is fulfilled.

Preferred embodiments of the invention and further aspects thereof are described below, each of which, unless expressly excluded, may be combined with each other and with the aspects of the invention described below as desired.

In a preferred embodiment, when the monitored source voltage fulfils a source voltage intervention criterion and/or the monitored control variable fulfils a control variable intervention criterion and/or an increase of the monitored source voltage fulfils a voltage increase rate intervention criterion, i.e. in case of a HVRT event, a voltage increase or a current increase at the electrolysis modules above the current or nominal voltage or current level, respectively, is prolongated. This is preferably achieved by means of additional inductance units in electrolysis circuits electrically coupled to the rectifier units. Preferably, the voltage or current increase is prolongated by means of additional inductance units such that the DC voltage or DC current at the electrolysis modules does not immediately raise significantly above the level prior to the voltage or current increase, respectively. By this means, sufficient time for reliably limiting the voltage or current increase on the secondary side of the rectifier units by means of operating the rectifier units with the constant firing angle can be provided.

In another preferred embodiment, when the monitored source voltage fulfils the source voltage intervention criterion and/or the monitored control variable fulfils the control variable intervention criterion and/or an increase of the monitored source voltage fulfils the voltage increase rate intervention criterion, the rectifier units are operated with a constant firing angle, preferably for a first predetermined amount of time. This may give the control system of the rectifier units sufficient time to adapt to an increase in voltage on the secondary side of the central transformer unit. In other words, by this means it is possible to bridge the time required for e.g. a control loop of the control system to adapt to an HVRT event and control the firing angle accordingly.

Preferably, the first predetermined amount of time ranges from 50 ms to 100 ms. I.e. the first predetermined amount of time interval amounts to at least 50 ms. Alternatively or additionally, the first predetermined amount of time amounts to at most 100 ms. Such an amount of time has proven sufficient for adaptation of the control mechanisms of the control system to the HVRT event. It is long enough to override the slow reaction time of the control system, but short enough to enable a follow-up with flexible self-regulating control of the firing angle. In other words, it is long enough to prevent a significant overcurrent on the DC side of the rectifier units, but short enough to prevent a potentially ineffective. i.e. non-adaptive, control of the firing angle.

In yet another preferred embodiment, the rectifier units are operated with a constant firing angle when the monitored source voltage reaches or exceeds a predefined source voltage threshold. Said threshold may, e.g., be at least 1.1 times the nominal voltage level. In other words, the source voltage intervention criterion may correspond to reaching or exceeding a predefined source voltage threshold, particularly of at least 1.1 times the nominal voltage level. By this means, the current control on the output side of the rectifier units can directly depend on the monitored source voltage. This allows a very fast reaction to a potential overvoltage above the nominal voltage level. Setting the source voltage threshold to at least 1.1 times the nominal voltage level prevents the fulfilment of the source voltage intervention criterion only when the current on the DC side of the rectifier units has already risen substantially or to a critical value, respectively.

Alternatively or additionally, the rectifier units are operated with a constant firing angle when the firing angles associated with the control variable continuously increase for a second predetermined amount of time. Because an ever increasing firing angle usually indicates an attempt of the control system to limit or reduce the current on the DC side of the rectifier units, the firing angle associated with the control variable continuously (albeit slowly) increasing for a prolonged time might be indicative of an (approaching) HVRT event. By relying on the control variable value, the control system may be utilized to detect the necessity to operate the electrolysis system in HVRT mode. Particularly, even low magnitude HVRT events can be detected that way in advance. That is, a HVRT event might possibly be detected this way even though the grid voltage has not yet reached a critical value above the nominal voltage level.

For example, the second predetermined amount of time may range from 20 ms to 100 ms, preferably from 30 ms to 50 ms. Specifically, the second predetermined amount of time amounts to at least 20 ms. Alternatively or additionally, the second predetermined amount of time amounts up to 100 ms. Such time spans have proven to be sufficiently long for detecting steadily and slowly approaching HVRT events, yet short enough to enable a swift reaction, i.e. a switch into HVRT operation of the rectifier units, before the overcurrents on the secondary (DC) side of the rectifier units become too large.

In yet another preferred embodiment, when the monitored source voltage fulfils the source voltage intervention criterion and/or the monitored control variable fulfils the control variable intervention criterion, a control loop of the control system for determining the control variable being associated with the firing angles is bypassed. That means that preferably, the control variable is no longer used to control the rectifier units. This allows the slow reaction time of the control system to be overcome, and enables an immediate reaction to a HVRT event. Thus, rectifier unit control can be sped up significantly.

In yet another preferred embodiment, the constant firing angle is determined based on the actual source voltage. In other words, the determination of the constant firing angle may be based on the magnitude of the detected HVRT event, e.g. the detected overvoltage with respect to the nominal voltage level. Alternatively, the constant firing angle may be determined based on a predetermined DC threshold, i.e. a threshold or current value that is acceptable for operation of the electrolysis modules. Therein, the predetermined DC threshold is preferably associated with the actual source voltage or magnitude of the HVRT event. For example, the constant firing angle may be read from a lookup table, wherein in said lookup table, different overvoltages above the nominal voltage level are associated with respective firing angles practicable in these situations.

In yet another preferred embodiment, the source voltage is the power grid voltage provided at the primary side of the central transformer unit. In other words, the power grid voltage of the power grid to which the central transformer unit is connected is monitored. This allows to detect a HVRT event directly, **e.g.** unfiltered, and immediately at the source. Specifically, when considering whether a HVRT operation of the electrolysis system, in particular of the rectifier units, is required, the transformation characteristics of the central transformer unit do not have to be taken into account.

In the alternative, the source voltage is the transformed operating voltage provided at the secondary side of the central transformer unit. In other words, the input voltage of the rectifier units may be monitored. This allows to detect a HVRT event at lower voltage levels, making the voltage monitoring easier and more cost-effective.

According to a second aspect of the invention, the electrolysis system comprises i) multiple electrolysis modules, each of said electrolysis modules having a plurality of electrolysis cells, ii) multiple rectifier units, iii) a central transformer unit for connection to a power grid, iv) a source voltage monitoring unit for monitoring a source voltage provided at the central transformer unit, v) a control variable monitoring unit for monitoring a control variable in a control system of the rectifier units, said control variable being associated with firing angles of said rectifier units. Additionally, vi) a control unit is provided for operating the rectifier units with a constant firing angle when the monitored source voltage fulfils a source voltage intervention criterion and/or the monitored control variable fulfils a control variable intervention criterion.

Preferably, the control unit includes an intervention module configured for, particularly continuously, checking whether the source voltage fulfils the source voltage intervention criterion and/or whether the control variable fulfils the control variable intervention criterion. The intervention module may then accordingly activate the control unit to exert control on the rectifier units based on the constant firing angle.

The inventive electrolysis system is suited for a reliable and fast assessment of a HVRT event, i.e. detection of the necessity to operate the system in a HVRT mode, and can thus prevent overcurrents on the output (DC) side of the rectifier units to become dangerously large.

In a preferred embodiment, each electrolysis module is integrated in an electrolysis circuit electrically coupled to the corresponding rectifier unit. Preferably, each electrolysis circuit includes a, preferably dedicated, inductance unit raising the inductance of the corresponding electrolysis circuit. Preferably, said at least one inductance unit raises the inductance such that a voltage increase or a current increase at the electrolysis modules above the current or nominal voltage or current level, respectively, is prolongated. Therein, the previous voltage or current level preferably corresponds to the nominal operating voltage or current of the electrolysis units. For example, the inductance units may be configured to prolong a voltage or current increase associated with an HRVT event such that the DC voltage or DC current at the electrolysis modules does not immediately raise significantly above the level prior to the voltage or current increase, respectively. By means of the additional inductance units, sufficient time for reliably limiting the voltage or current increase on the secondary side of the rectifier units by means of operating the rectifier units with the constant firing angle can be provided.

The at least one inductance unit preferably comprises one or more dedicated inductances, such as coils. Alternatively or additionally, the at least one inductance unit comprises a DC busbar having an increased length and/or cross section (with respect to a nominal DC busbar), multiple DC busbars in parallel arrangement and/or an iron core arranged around a DC busbar to utilise the ripple of the DC current.

In yet another preferred embodiment, the control unit is configured to switch from an idle mode during standard operation of the electrolysis system into a high voltage ride through mode when the monitored source voltage fulfils the source voltage intervention criterion and/or the monitored control variable fulfils the control variable intervention criterion. Preferably, the control unit is configured to determine the constant firing angle based on the actual source voltage. For example, the control unit may be configured to determine the constant firing angle based on the magnitude of the detected HVRT event, that is the overvoltage with respect to the nominal voltage level. Such a control unit may comprise a programmable logic controller (PLC) that is designed or programmed accordingly. In one embodiment, the control unit comprises the intervention unit for checking whether the source voltage intervention criterion and/or the control variable intervention criterion are fulfilled.

Alternatively, the control unit may be configured to determine the constant firing angle based on a predetermined DC threshold. The predetermined DC threshold is preferably associated with the actual source voltage or magnitude of the HVRT event, respectively. For example, the control unit may be configured to read the constant firing angle from a lookup table having overvoltages above the nominal voltage level associated with respective firing angles practicable in these situations.

The properties, features and advantages of the invention described above, as well as the manner in which they are achieved, will be explained in more detail in connection with the figures in the following description of examples. Where appropriate, the same reference signs are used in the figures for the same or corresponding elements of the invention. The examples serve to explain the invention and do not limit the invention to the combinations of features indicated therein, even with respect to functional features. Moreover, any of the features disclosed in the examples below may be considered in isolation and suitably combined with the features of any of the above embodiments and their further aspects.

It is shown in
- FIG 1: an example of an electrolysis system;
- FIG 2: an example of a voltage-current curve of an electrolysis module; and
- FIG 3: an example of a method for operating an electrolysis system.

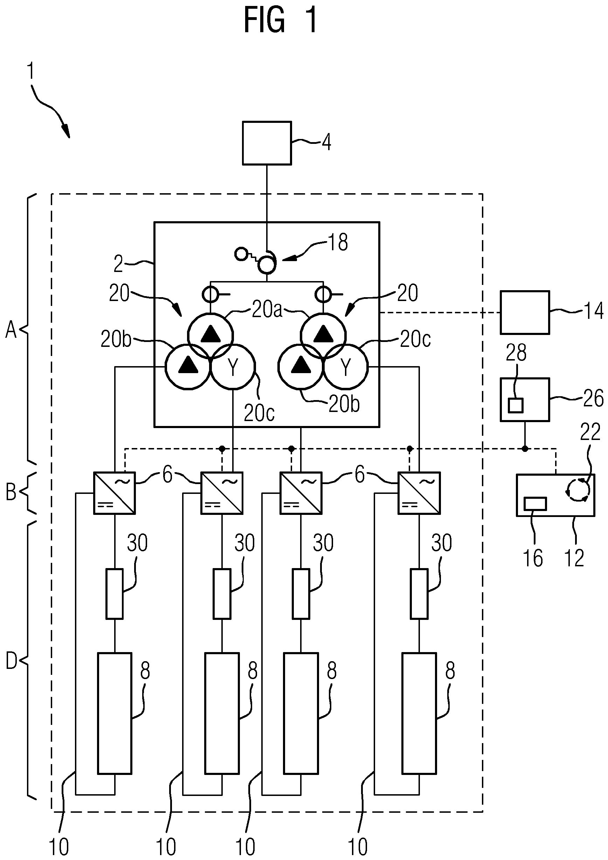

FIG 1 shows an example of an electrolysis system 1 comprising a central transformer unit 2 for connection to a power grid 4, multiple rectifier units 6 and multiple electrolysis modules 8. Each electrolysis module 8 is integrated into an electrolysis circuit 10 supplied with direct current by the respective rectifier unit 6. The rectifier units 6 are controlled by a control system 12, e.g. a programmable logic controller (PLC).

The central transformer unit 2 is preferably part of an AC voltage section A of the electrolysis system 1. The central transformer unit 2 preferably comprises a tap changer 18 which allows to realize different voltage levels on the secondary side of the central transformer unit 2. Specifically, the tap changer 18 consists of several tap positions designed for different voltage levels, i.e. different transformation ratios. This allows the tap changer 18 to transform the grid voltage provided by the power grid 4 into the operating voltage output to the rectifier units 6 as required. Thereby, the idle power of the central transformer unit 2 can be reduced by reducing the amplitude of the alternating current output by the central transformer unit 2.

Further, the central transformer unit 2 comprises two three-winding transformers 20 with a phase difference of 15° between them, such that a so-called 24-pulse system operation is feasible. The three windings 20a, 20b, 20c of the three-winding transformers 20 are configured such that one of the secondary sides of each three-winding transformer 20, e.g. the winding 20b, has an aligned phase with the primary side, e.g. winding 20a, (i.e. no phase shift between the primary and one of the secondary sides), and the other secondary side, e.g. winding 20c, has a phase shift of 30° compared to the primary or the other secondary side of the transformer 20. This helps to suppress or at least reduce lower order harmonics.

Advantageously, the rectifier units 6 are of the thyristor type, although other types are feasible as well. Each of the rectifier units 6, which form an interface B between the AC section A and a DC section C of the electrolysis system 1, preferably comprises two switching elements for each of the three phases of the (transformed) operating voltage output by the central transformer unit 2. The time after which such a switching element switches from non-conducting to conducting after the operating voltage in the respective phase has a zero crossing is termed firing angle. By means of controlling said firing angle, the magnitude of the direct current output by the respective rectifier unit 6 and fed into the respective electrolysis circuit 10 can be adapted as required. Therefore, during standard operation, the control system 12 adapts the output direct current of the rectifier units 6 to the actual power requirement of the electrolysis modules 8 by controlling the firing angle of the rectifier units 6. To this end, the control system 12 comprises a control loop 22 for determining the value of a control variable associated with a firing angle of the rectifier units 6. Advantageously, besides the actual power requirement of the electrolysis modules 6, the actual source voltage serves as an input to the control loop 22 as well. Here, the source voltage can either be the grid voltage provided by the power grid 4, or the operating voltage obtained by transformation of said grid voltage by means of the central transformer unit 2. I.e. the source voltage may be the voltage on either the primary side or the secondary side of the central transformer unit 2.

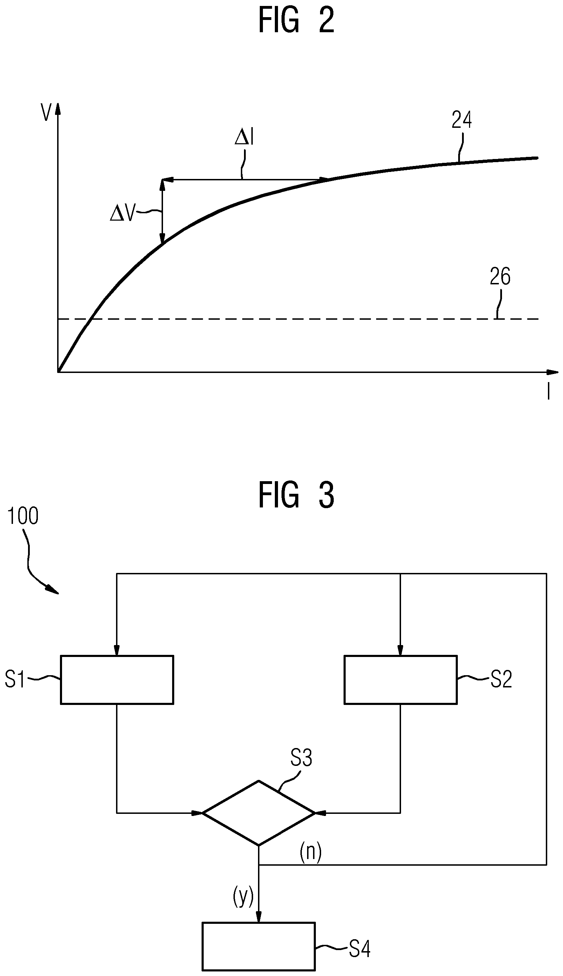

Due to grid code requirements of the power grid 4, it might be necessary to keep the electrolysis system 1 connected to the power grid 4 even in the event of an overvoltage in the power grid 4. This is termed a high-voltage ride through (HVRT) capability and quite a challenge for the electrolysis system 1, because the electrolysis modules 8 have flat voltage-current curves. This means that the electrolysis characteristic is highly dependent on the input DC voltage, as shown in FIG 2.

FIG 2 shows an example of voltage-current (VI) curve 24 of an electrolysis module 8 shown in figure 1. The VI curve 24 shows the dependence of the voltage V on the input DC current I. Above a voltage threshold 26 for hydrogen production, a comparatively minor voltage increase ΔV, e.g. of approximately 100 V, may be associated with a current increase ΔI of an order of magnitude larger, e.g. of approximately 4000 A. Therefore, it is important to reliably control the input voltage of the electrolysis modules 8 very carefully.

Turning back to FIG 1, in case of a sudden overvoltage in the power grid 4 or, more general, in the AC section A of the electrolysis system 1, the control system 12 and its control loop 22 are usually not fast enough to compensate for such a voltage increase simply by adapting the firing angle of the rectifier units 6 accordingly.

Therefore, a control unit 26 is provided for operating the rectifier units 6 with a constant firing angle immediately in case of a HVRT event, i.e. when a HVRT operation of the electrolysis system 1 is required. Specifically, the control unit 26 may be arranged to override the control system 12. To this end, the control unit 26 can, for example, be formed by a programmable logic controller (PLC) that is programmed accordingly. In case of an HVRT event, the PLC may change from an idle or surveillance mode to an active or intervention mode, in which it takes over control of the rectifier units 6 or at least their firing angles.

For example, the control unit 26 may comprise an intervention module 28. Said intervention module 28 is advantageously configured for, preferably continuously, checking whether the source voltage fulfils a source voltage criterion and whether a control variable of the control system 12 fulfils a control variable intervention criterion. Advantageously, said control variable is associated with the firing angles of the rectifier units 6 and corresponds to an output of a control loop 22 of the control system 12. If at least one of said two criteria is met, the intervention module 28 may activate the active or intervention mode of the control unit 26.

In order to be able to check the fulfilment of the source voltage intervention criterion and the control variable intervention criterion, a source voltage monitoring unit 14 may be provided. The source voltage monitoring unit 14 advantageously monitors the source voltage provided at the central transformer unit 2. Additionally, a control variable monitoring unit 16 may be provided for monitoring the control variable in the control system 12.

The intervention module 28, the source voltage monitoring unit 14 and/or the control variable monitoring unit 16 may be embodied by hard- and/or software. The intervention module 28, the source voltage monitoring unit 14 and/or the control variable monitoring unit 16 can particularly comprises a processing unit, preferably data- or signal-connected to a memory and/or bus system. For example, the intervention module 28, the source voltage monitoring unit 14 and/or the control variable monitoring unit 16 can comprise a microprocessor unit (CPU) or a module thereof and/or one or more programs or program modules which, when executed, perform the corresponding tasks described above.

Affecting the DC voltage level output by the rectifier units 6 after setting a constant firing angle requires a zero crossing of the operating voltage input of the rectifier units 6 (in each phase). Only after said zero crossing(s), the constant firing angle can be applied. Thus, even though the control logic can react in the µs range to new network conditions, i.e. to an HVRT event, the effects of said control can take place after a delay of approx. 3.3 ms, as the firing of the thyristor depends on the positive zero crossing of the input voltage.

To tackle this issue, each electrolysis circuit 10 is preferably provided with at least one dedicated inductance unit 30. Said dedicated inductance units 30 advantageously raise the inductance of the corresponding electrolysis circuit 10. The increased inductance can moderate, i.e. prolongate, the increase of the direct current in the corresponding electrolysis circuit 10. This provides additional time for the rectifier units 6 to start operation with the constant firing angle, i.e. to have a zero crossing of the input voltage before the overcurrent of the DC side of the rectifier units 6 becomes critical in terms of the electrolysis system 1 safety.

The operation of the electrolysis system 1 is described in even more detail in conjunction with FIG 3 below.

FIG 3 shows an example of a method 100 for operating an electrolysis system, e.g. the electrolysis system 1 as shown in FIG 1. The operated electrolysis system preferably comprises a central transformer unit connected or connectable to a power grid, multiple rectifier units and multiple electrolysis modules.

In a step S1, a source voltage provided at the central transformer unit is monitored. To this end, the input voltage of the central transformer unit, i.e. a grid voltage provided by the power grid to which the central transformer unit is connected, can be monitored. Alternatively, the transformed voltage output by the central transformer unit can be monitored. Preferably, said monitoring is performed in a continuous manner.

At the same time, in a further step S2, a control variable in a control system of the rectifier units is monitored. Advantageously, said monitored control variable is associated with the firing angles of said rectifier units. For example, the monitored control variable can be the output of a control loop of the control system which may use the actual source voltage and/or power requirements of the electrolysis modules as input.

In a further step S3, it is checked whether the monitored source voltage fulfils the source voltage intervention criterion and/or the monitored control variable fulfils a control variable intervention criterion and/or a voltage increase rate fulfils a voltage increase rate intervention criterion. For example, it can be checked whether the monitored source voltage exceeds the source voltage threshold, wherein said source voltage threshold is indicative of an HVRT event. Such a source voltage threshold is preferably as high as 1.1 times the nominal source voltage level.

On the other hand, it may be checked whether the monitored control variable behaves in a manner indicative of an HVRT event, e.g. continuously increases for a predetermined amount of time and/or reaches or exceeds a predetermined threshold. For example, it may be checked if the firing angle associated with the monitored control variable continuously increases for more than a couple of, say three, periodic cycles of the usual 50 Hz grid frequency (i.e. 60 ms) and/or exceeds e.g. 10°.

Alternatively or additionally, it can be checked if the voltage increase rate, i.e. the source voltage increase over time, reaches or exceeds a predetermined rate threshold.

If at least one of said three criteria is met (y), the rectifier units are operated with a constant firing angle. The rectifier units can be operated with this firing angle for e.g. 50 ms to 100ms. This constant firing angle may be determined based on the actual source voltage. For example, the constant firing angle may be read from a lookup table which suggests firing angles for various possible overvoltages. If, on the other hand, none of said two criteria is met (n), the source voltage and the control variable are further monitored, i.e. the method 100 continues with steps S1 and S2.

It is also possible to check, in step S3, if the source voltage fulfils a disconnect criterion. This disconnect criterion may correspond to a disconnect voltage threshold, that, when reached or exceeded, allows the electrolysis system to be disconnected from the power grid. Such a disconnect voltage threshold may be as high as 1.3 times the nominal source voltage, e.g. the nominal grid voltage level.

Although the invention has been further illustrated and described in detail by the above examples, the invention is not limited by the disclosed examples, and other variations may be derived therefrom by those skilled in the art without departing from the scope of the invention.

Independent of the grammatical term usage, individuals with male, female or other gender identities are included within the term.

## Claims

1. A method (100) for operating an electrolysis system (1) having multiple electrolysis modules (8) connected to a power grid (4) via a central transformer unit (2) and multiple rectifier units (6), the method (100) comprising:
- monitoring (S1) a source voltage provided at the central transformer unit (2);
- monitoring (S2) a control variable in a control system (12) of the rectifier units (6), said control variable being associated with the firing angles of said rectifier units (6); and
- operating (S4), when the monitored source voltage fulfils a source voltage intervention criterion and/or the monitored control variable fulfils a control variable intervention criterion, the rectifier units (6) with a constant firing angle.

2. The method (100) according to claim 1, wherein, when the monitored source voltage fulfils a source voltage intervention criterion and/or the monitored control variable fulfils a control variable intervention criterion and/or an increase of the monitored source voltage fulfils a voltage increase rate intervention criterion, a voltage increase (ΔV) or a current increase (ΔI) at the electrolysis modules (8) above the current voltage or current level, respectively, is prolongated by means of additional inductance units (30) in electrolysis circuits (10) electrically coupled to the rectifier units (6).

3. The method (100) according to claim 1 or 2, wherein, when the monitored source voltage fulfils a source voltage intervention criterion and/or the monitored control variable fulfils a control variable intervention criterion and/or an increase of the monitored source voltage fulfils a voltage increase rate intervention criterion, the rectifier units (6) are operated with the constant firing angle for a first predetermined amount of time.

4. The method (100) according to claim 3, wherein the first predetermined amount of time ranges from 50 ms to 100 ms.

5. The method according to any one of the preceding claims, wherein the rectifier units (6) are operated with a constant firing angle when the monitored source voltage reaches or exceeds a predefined source voltage threshold of at least 1.1 times the nominal voltage level.

6. The method (100) according to any one of the preceding claims, wherein the rectifier units (6) are operated with a constant firing angle when the firing angles associated with the control variable continuously increase for a second predetermined amount of time.

7. The method (100) according to claim 6, wherein the second predetermined amount of time ranges from 3 ms to 15 ms, preferably from 5 ms to 10 ms.

8. The method (100) according to any one of the preceding claims, wherein, when the monitored source voltage fulfils a source voltage intervention criterion and/or the monitored control variable fulfils a control variable intervention criterion, a control loop (22) of the control system (12) for determining the control variable being associated with the firing angles is bypassed.

9. The method (100) according to any one of the preceding claims, wherein the constant firing angle is determined based on the actual source voltage.

10. The method (100) according to any one of the preceding claims, wherein the source voltage is the power grid voltage provided at the primary side of the central transformer unit (2).

11. The method (100) according to any one of claims 1 to 9, wherein the source voltage is the transformed operating voltage provided at the secondary side of the central transformer unit (2).

12. An electrolysis system (1), comprising
- multiple electrolysis modules (8), each of said electrolysis modules (8) having a plurality of electrolysis cells;
- multiple rectifier units (6);
- a central transformer unit (2) for connection to a power grid;
- a source voltage monitoring unit (14) for monitoring a source voltage provided at the central transformer unit (2);
- a control variable monitoring unit (16) for monitoring a control variable in a control system (12) of the rectifier units (6), said control variable being associated with firing angles of said rectifier units (6); and
- a control unit (26) configured for operating the rectifier units (6) with a constant firing angle when the monitored source voltage fulfils a source voltage intervention criterion and/or the monitored control variable fulfils a control variable intervention criterion.

13. The electrolysis system (1) according to claim 12 wherein each electrolysis module (8) is integrated in an electrolysis circuit (10) electrically coupled to the corresponding rectifier unit (6), each electrolysis circuit (10) including an additional inductance unit (30) for raising the inductance of the corresponding electrolysis circuit (10).

14. The electrolysis system (1) according to claim 12 or 13, wherein the control unit (26) is configured to switch from an idle mode during standard operation of the electrolysis system (1) into a high voltage ride through mode when the monitored source voltage fulfils the source voltage intervention criterion and/or the monitored control variable fulfils the control variable intervention criterion, wherein the control unit (6) is configured to determine the constant firing angle based on the actual source voltage.
